# NEUE EUROPÄISCHE PATENTSCHRIFT

(11) **EP 1 259 383 B2**
(45) Veröffentlichungstag und Bekanntmachung des Hinweises auf die Entscheidung über den Einspruch: **07.03.2012**
(45) Hinweis auf die Patenterteilung: 24.09.2003
(21) Anmeldenummer: 01905806.4
(22) Anmeldetag: 20.02.2001
(51) Int. Cl.: B42D 15/10

(54) **MEHRSCHICHTIGE, LAMINIERTE KARTE MIT EINGELAGERTEM, RELIEFSTRUKTUREN AUFWEISENDEN SICHERHEITSELEMENT**
LAMINATED MULTI-LAYER CARD WITH AN INLAID SECURITY ELEMENT IN THE FORM OF RELIEF STRUCTURES
CARTE STRATIFIEE A COUCHES MULTIPLES COMPORTANT UN ELEMENT DE SECURITE INCORPORE A STRUCTURES EN RELIEF

(30) Priorität: 21.02.2000 DE 10007916
(43) Veröffentlichungstag der Anmeldung: 27.11.2002
(73) Patentinhaber: Giesecke & Devrient GmbH, 81677 München (DE)
(72) Erfinder: KELLER, Mario, 83093 Bad Endorf (DE); ENDRES, Günter, 94034 Passau (DE); ENGL, Manfred, 81371 München (DE)
(74) Vertreter: Klunker . Schmitt-Nilson . Hirsch
(86) Internationale Anmeldenummer: PCT/EP2001/001901
(87) Internationale Veröffentlichungsnummer: WO 2001/062516

(56) Entgegenhaltungen:
- EP-A- 0 013 557
- EP-A1- 0 609 683
- EP-A1- 0 767 210
- EP-B1- 0 201 323
- EP-B1- 0 723 878
- WO-A1-94/19201
- WO-A1-95/09084
- WO-A1-99/46133
- DE- - 2 451 732
- DE-A1- 2 512 550
- DE-A1- 3 942 663
- DE-B1- 2 907 004
- DE-C2- 4 406 185
- GB-A- 2 129 739
- JP-A- 10 105 031
- US-A1- 4 597 814
- US-A1- 5 658 411
- RANKL, WOLFGANG: 'Handbuch der Chipkarten:Aufbau-Funktionsweise-Einsatz von Smart-Cards', 1996, HANSER VERLAG, WIEN Seiten 52 - 59

## Beschreibung

Die Erfindung betrifft eine mehrschichtige Karte, insbesondere Kreditkarte, Identitätskarte, Bankkarte oder dergleichen, die ein Sicherheitselement mit Beugungsstrukturen, insbesondere holographischen Reliefstrukturen aufweist sowie Verfahren zur Herstellung der Karte.

Es ist allgemein bekannt, Karten, insbesondere Bank-, Kredit- oder Identifikationskarten mit Sicherheitselementen in Form von Hologrammen, Kinegrammen oder dergleichen auszustatten. Die Sicherheitselemente weisen sehr spezifische optische Effekte auf, die vom Betrachtungswinkel abhängig sind und ohne Hilfsmittel visuell überprüft werden können und deren Herstellung einen erheblichen technologischen Aufwand erfordert. Das Vorhandensein eines derartigen Sicherheitselements mit den definierten optischen Effekten wird als Echtheitskriterium bewertet, d.h. vom Vorhandensein eines derartigen Sicherheitselementes wird auf die Echtheit der Karte geschlossen.

Üblicherweise werden die Beugungsstrukturen aufweisenden Sicherheitselemente auf die äußere Oberfläche der Karten aufgeklebt. Geschieht dies in der sogenannten Hot-Stamp-Technik, wie dies in der deutschen Offenlegungsschrift 33 08 831 beschrieben ist, sind diese Sicherheitselemente nach dem Aufkleben auf der Karte ohne Zerstörung nicht mehr von der Karte zu entfernen. Die Übertragung eines echten Sicherheitselementes von einer z.B. abgelaufenen Karte auf eine gefälschte neue Karte kann somit ausgeschlossen werden. Nachteilig ist allerdings, dass diese Elemente, gerade weil sie keine Eigenstabilität aufweisen, extrem dünn und damit auch mechanisch sehr empfindlich sind. Derartige Elemente nutzen sich beim Kartengebrauch üblicherweise relativ schnell ab, d.h. durch Abrieb wird der Schichtaufbau zerstört, wodurch der aus den Beugungsstrukruren resultierende spezifische optische Effekt verloren geht. Wenngleich der Sicherheitswert von Hologrammen, Kinegrammen etc. für Karten relativ hoch eingestuft wird, eignen sich derartige Sicherheitselemente somit aber weniger für Karten mit vorgegebener langer Laufzeit, wie z.B. für Personalausweise, Pässe, Führerscheine etc.

Es gibt bereits verschiedene Versuche, Sicherheitselemente mit Beugungsstrukturen ins Innere der Karte einzulagern, um den mechanischen Verschleiß zu vermeiden. Es hat sich aber gezeigt, dass die handelsüblichen Hologramme, Kinegramme etc. während des Laminiervorganges durch die Wärme- und Druckeinwirkung entweder völlig zerstört oder aber in der Qualität so stark beeinträchtigt werden, dass eine weitere Nutzung ausscheidet. Es gibt zwar Vorschläge, die Kartenbereiche, in denen die Beugungsstrukturen eingelagert sind, während des Laminiervorganges schonender zu behandeln als die Flächen, die keine Beugungsstrukturen aufweisen. Den Vorschlägen gemäß werden diese Bereiche bei der Herstellung nicht so hohen Temperaturen und ggf. auch nur einem geringeren Kaschierdruck ausgesetzt. Derartige Maßnahmen, wie sie z.B. in der EP 0 013 557 beschrieben sind, konnten aber den Grad der Beschädigung der Sicherheitselemente nur geringfügig reduzieren. Stattdessen weisen die geringer belasteten Kartenbereiche einen schlechteren Folienverbund, auf der visuell erkennbar ist und der in diesen Bereichen in Folge von Biegebelastungen verstärkt zum Aufspalten der Kartenschichten führt.

Aufgabe der Erfindung ist es daher, mehrschichtige, laminierte Karten mit eingelagerten Reliefstrukturen vorzuschlagen, die preiswert und mit den üblichen Laminierverfahren herstellbar sind und die die Belastungen im üblichen Gebrauch der Karte besser überstehen.

Gelöst wird diese Aufgabe durch die Merkmale der unabhängigen Ansprüche. Besondere Ausführungsformen ergeben sich aus den Unteransprüchen.

Dementsprechend werden für die die Reliefstruktur aufweisende Schicht einerseits und die zu laminierenden Kartenschichten andererseits Materialien gewählt, deren Erweichungstemperaturen signifikant unterschiedlich sind.

lndem die Reliefstruktur des Sicherheitselements in einem Material (Kunststoff oder Lack) vorliegt, das entweder von Natur aus eine vergleichsweise hohe Erweichungstemperatur hat oder zumindest nach Erzeugung der Reliefstruktur in einen Zustand mit hoher Erweichungstemperatur gebracht wird, und indem die Folien, aus der die Karte laminiert wird, eine demgegenüber geringere Erweichungstemperatur aufweisen, wird sichergestellt, dass die Reliefstruktur des zwischen den Folien der Karte eingelagerten Sicherheitselements durch die beim Laminierprozess auftretenden Temperaturen und Drücke nicht oder zumindest nicht in nennenswertem Umfang in Mitleidenschaft gezogen wird. Die Materialien für die Kartenfolien und für die Reliefstruktur müssen so gewählt sein, dass die zugehörigen Erweichungstemperaturen während des Laminierens auf einem ausreichend unterschiedlichen Niveau liegen. Als Material für die Folien der laminierten Karte werden Thermoplaste verwendet, die von Natur aus eine geringe Erweichungstemperatur besitzen. Als Material, in dem die Reliefstruktur vorliegt, können Kunststoffe, Lacke oder dergleichen mit höherer Erweichungstemperatur verwendet werden, insbesondere Duroplaste oder ausgehärtete Lacke oder dergleichen. Insbesondere die vernetzten Materialien, wie ausgehärtete Lacke eignen sich für die erfindungsgemäße Verwendung besonders gut.

Als besonders geeignet haben sich bei der Verwendung von Deckfolien aus Polycarbonat (PC), Polyester (PET-A: amorphes Polyethylenterephthalat) oder Polyvinylchlorid (PVC) als Material für das Sicherheitselement vernetzte Reaktionslacke oder kristallines Polyester bewährt.

Als vernetzte Reaktionslacke eignen sich insbesondere strahlungshärtbare Lacke (nachfolgend als "Reaktionslacke" bezeichnet). Als besonders geeignet haben sich dabei radikalisch und kationisch härtende, insbesondere UVstrahlungshärtende Lacke sowie blaulichthärtende Lacke erwiesen.

In die vorgenannten Reliefmaterialien lassen sich auf kostengünstige Weise feine Reliefstrukturen durch Prägen entweder in die Thermoplaste oder die noch nicht vernetzten oder erst teilweise vorvernetzten Duroplaste und Lacke einbringen.

Es sind vielfältige Möglichkeiten denkbar, wie das Sicherheitselement mit den Reliefstrukturen in die zu laminierende Karte eingebracht werden kann.

Beispielsweise kann die Reliefstruktur in eine thermoplastische oder noch nicht endgültig vernetzte duroplastische Kunststoffschicht kalt- oder warmgeprägt werden. Die so geprägte Kunststoffschicht wird mit oder ohne eine Metallbedampfung auf eine Kartenfolie transferiert bzw. aufgeklebt.

Andererseits kann die Reliefstruktur in eine noch nicht vernetzte Lackschicht geprägt werden, die auf einer Transferfolie bzw. Stützschicht vorliegt. Diese Lackschicht wird, nachdem sie ausgehärtet ist, mit oder ohne Transferfolie sowie mit oder ohne eine auf die Reliefstruktur aufgedampfte Metallschicht auf eine Folie der zu laminierenden Karte beispielsweise im Hot-Stamp-Verfahren übertragen.

Es ist auch denkbar, dass das Transferband bzw. die Stützschicht für den vernetzbaren Lack durch eine Folie der zu laminierenden Karte selbst gebildet wird. In diesem Fall wird die die Beugungsstruktur beinhaltende Lackschicht zusammen mit der Stütz- oder Transferschicht im Kartenaufbau integriert.

Die vorgenannten Verfahren zum Einprägen des Reliefs in eine Lackschicht und zum Übertragen der Lackschicht auf ein Substrat einschließlich der zuvor genannten speziellen Reaktionslacke sind ausführlich in EP 0 684 908 B1 beschrieben, deren Offenbarungsgehalt insoweit ausdrücklich in die vorliegende Anmeldung aufgenommen wird. Allerdings betrifft die EP 0 684 908 B1 das Applizieren von Hologrammstrukturen auf die Oberfläche insbesondere von Papiersubstraten, wie Banknoten. Es hat sich allerdings überraschenderweise gezeigt, dass die dort beschriebenen Verfahren und Lacke in entsprechender Weise auch für die vorliegenden Zwecke der Herstellung von mehrschichtigen Karten mit eingelagerten Hologrammstrukturen anwendbar sind.

Versuche haben gezeigt, dass die eingangs beschriebenen Materialkombinationen die Einbettung der Sicherheitselemente mit herkömmlichen Kaschierverfahren ermöglicht. Aufgrund der höheren Erweichungstemperatur der für die Sicherheitselemente verwendeten Kunststoffmaterialien bleibt insbesondere das Mikrorelief derselben weit gehend unbeschädigt.

Verwendet man für den Kartenaufbau Folien, die während des Kaschiervorganges eine stärkere Tendenz zum "Fließen" zeigen, kann es allerdings vorkommen, dass die Sicherheitselemente, soweit sie als sehr dünne Lackschichten mit einer Dicke kleiner als 5 µm Verwendung finden, nach dem Kaschiervorgang Mikrorisse aufweisen, die den Gesamteindruck noch immer stören können. In diesen Fällen empfiehlt es sich, die Sicherheitselemente zusammen mit einer Stützfolie einzubetten. Solange das Sicherheitselement zusammen mit der Stützfolie mindestens 10 µm Dicke aufweist, treten diese Effekte (Mikrorisse) in der Regel nicht auf. Solange das Sicherheitselement incl. Stützschicht eine Dicke von ca. 30 µm nicht wesentlich überschreitet, kann es auch ohne weitere Zusatzmaßnahmen in den üblichen Kartenaufbau integriert werden. Falls, aus welchen Gründen auch immer, das Sicherheitselement deutlich dicker ausgeführt wird, z.B. incl. Stützschicht mit einer Dicke von 100 µm oder mehr, ist die Stelle, an der das Sicherheitselement in den Kartenaufbau eingefügt werden soll, durch entsprechende Aussparungen, Vertiefungen, Fenster oder dergleichen zu berücksichtigen. Derartige Maßnahmen erübrigen sich allerdings, wenn gemäß einer bevorzugten Ausführungsform die Stützschicht als ganzflächige Folie des Kartenaufbaus vorgesehen ist. In diesem Fall kann die Stützschicht auch deutlich dicker als 100 µm ausgeführt sein. Die die Beugungsstrukturen aufweisende Schicht sollte dagegen, soweit sie nur in Teilbereichen der Stützschicht vorgesehen ist, eine Dicke von 10 µm nicht überschreiten.

In einer weiteren bevorzugten Ausführungsform sind Stützschicht und Beugungsstrukturschicht ganzflächig vorgesehen, wobei entweder nur die Bereiche, in denen die optischen Beugungseffekte benötigt werden, mit der reflektierenden Metallschicht versehen sind oder aber die Bereiche, in denen keine Beugungsstrukturen vorliegen sollen, mit opaker Druckfarbe überdruckt bzw. abgedeckt werden.

Dem Fachmann ist klar, dass zur Erzielung eines gleichmäßigen optischen Gesamteindrucks ein guter Verbund zwischen Sicherheitselement und den angrenzenden Schichten des Kartenaufbaus notwendig ist. Dies erreicht man durch sorgfältige Abstimmung der einzelnen Schichten aufeinander. Sollen Folien, Lacke oder Druckfarben miteinander kombiniert werden, die im Kaschierverbund nur eine schlechte Verbindung miteinander eingehen, sind zwischen diesen Schichten zusätzliche Klebschichten vorzusehen, die sich mit beiden Materialien gut verbinden. Dem Fachmann sind derartige Kleber bekannt.

Bei Verwendung einer ganzflächigen Stützschicht kann diese auch als Inlettschicht Verwendung finden, die das beidseitige Kartendruckbild trägt. Ist die Stützschicht transparent ausgeführt, kann durch homogenes Bedrucken von Teilflächen einerseits und Freilassen von Teilbereichen andererseits das optische Aussehen einer üblichen Karte erzielt werden, bei der ein durchsichtiges Fenster vorgesehen ist, in dem ein Sicherheitselement mit optischen Beugungsstrukturen zu erkennen ist. Weist das Sicherheitselement eine metallische Reflexionsschicht auf, ist es zwar von beiden Seiten zu betrachten, es ist allerdings nicht möglich, durch das "Fenster" der Karte hindurchzusehen. Falls derartige Effekte erwünscht sind, kann die metallische Reflexionsschicht vollständig oder teilweise weggelassen werden. Sieht man in der Metallschicht lediglich Unterbrechungen in Form von Schriftzeichen, Mustern oder dergleichen vor, wird damit ein zusätzlicher Sicherheitseffekt erreicht, da diese Unterbrechungen im Durchlicht geprüft werden können, wogegen die Beugungseffekte, die das gesamte Fenster überlagern, unter den definierten Betrachtungswinkeln zu prüfen sind.

Verwendet man eine durchgehend opake Stützschicht, können auf beiden Seiten der Stützschicht ggf. im selben Bereich der Karte, Beugungsstrukturen vorgesehen sein, die dann ebenfalls von beiden Seiten her überprüfbar sind. In diesem Fall können die optischen Beugungseffekte auf beiden Seiten auch unterschiedliche Beugungseffekte, z.B. unterschiedliche holographische Informationen, aufweisen.

Sieht man auf der transparenten Stützschicht eine ganzflächige Beugungsstrukturschicht vor und überdruckt sie von beiden Seiten mit unterschiedlich angeordneten Fensterbereichen, so ist die Beugungsstruktur in speziellen Bereichen nur von der einen Seite und in anderen Bereichen nur von der anderen Seite sichtbar. In den Fällen, in denen Fensterbereiche auf beiden Seiten vorgesehen sind, ist die Beugungsstruktur an derselben Stelle von beiden Seiten erkennbar.

Die Verwendung einer ganzflächigen Stützschicht hat ganz besondere Vorteile, da diese, wie jede andere Schicht des Kartenaufbaus, verarbeitet werden kann. Unabhängig davon, ob die Beugungsstrukturen ganz oder teilflächig vorgesehen sind, können diese als Folienbögen oder als Rollenware in bekannter Weise platziert aufgeklebt und geprägt werden.

Weitere Vorteile und Ausführungsvarianten werden anhand der Figuren erläutert. Es wird darauf hingewiesen, dass die Figuren keine maßstabsgetreue Darstellung der Erfindung bieten, sondern lediglich der Veranschaulichung dienen. Der im folgenden Text verwendete Begriff "Sicherheitselement" umfasst die Lack- oder Kunststoffschicht, in die das Relief eingeprägt ist, und, soweit vorhanden, die auf das Relief aufgedampfte Metallschicht, die Schutzschicht, die Transfer- bzw. Stützschicht (soweit sie mit in die Karte eingelagert wird) und die Kleberschichten, mit denen das Sicherheitselement mit den angrenzenden Schichten der mehrschichtigen Karte verbunden wird. Als Beugungsstrukturen sind alle Strukturen bezeichnet, die optische Beugungseffekte aufweisen, insbesondere Hologramme, Kinegramme, Moviegramme, Pixelgramme etc.

Es zeigen:
- Fig. 1: eine erfindungsgemäße, mehrschichtige, laminierte Karte mit eingelagertem Sicherheitselement in Draufsicht,
- Fig. 2-5: den Schnitt durch verschiedene Karten mit einlaminiertem Sicherheitselement,
- Fig. 6: eine Variante des Sicherheitselements nach Fig. 2, hier mit Stützschicht,
- Fig. 7: eine Variante des Sicherheitselements nach Fig. 2, bei der das Sicherheitselement unmittelbar auf einer Kartenfolie erzeugt wurde,
- Fig. 8: eine Variante des Sicherheitselements nach Fig. 2 mit zwei einander gegenüberliegenden Reliefstrukturen, und
- Fig. 9: eine Variante des Sicherheitselements nach Fig. 6 mit Stützschicht und ebenfalls zwei einander gegenüberliegenden Reliefstrukturen.

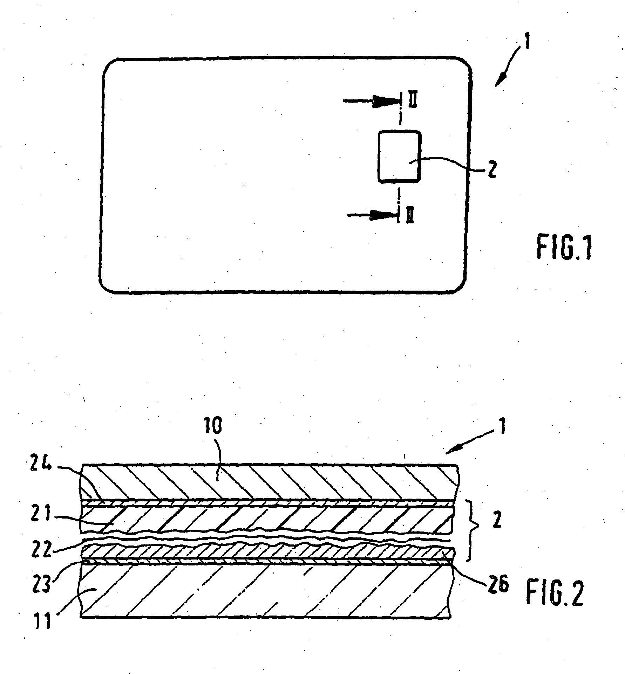

Fig. 1 zeigt eine mehrschichtige, laminierte Karte 1, beispielsweise eine Kreditkarte, in Draufsicht, in die ein Sicherheitselement 2 mit Reliefstrukturen, insbesondere einem Hologramm, eingelagert ist. Zusätzlich weist die Karte ein beidseitiges Druckbild und ggf. weitere Elemente und Sicherheitsstrukturen wie Chip, Unterschriftsstreifen und dergleichen auf, die in Fig.1 jedoch nicht dargestellt sind. Das Sicherheitselement 2 kann je nach Anforderungen die Form eines Fadens oder Bandes haben oder aber als etikettartiges Element (Patch) mit definierten Umrissformen ausgebildet sein.

Fig. 2 zeigt einen Querschnitt durch die Karte 1 im Bereich des Sicherheitselements 2 gemäß einer ersten Ausführungsform der Erfindung. Gezeigt sind Kartendeckschichten 10 und 11 mit dem dazwischen eingelagerten Sicherheitselement 2. Das Sicherheitselement 2 besteht aus einer transparenten Reliefschicht 21, in die das die holographischen Beugungsstrukturen bildende Relief eingeprägt ist, einer aufgedampften Metallschicht (22) optional, die den optischen Effekt der Beugungsstrukturen verstärkt, der transparenten Schutzlackschicht 26 sowie den beiden ebenfalls transparenten Kleberschichten 23 und 24, mit denen das Sicherheitselement 2 fest mit den Deckschichten 10 und 11 verbunden ist.

Die Deckschichten 10 und 11 sind transparent oder weisen zumindest transparente Fensterbereiche im Bereich des Sicherheitselements 2 auf, so dass das Hologramm von beiden Seiten der Karte erkennbar ist. Die holographische Information ist dann von der Rückseite spiegelverkehrt erkennbar und auch visuelle dreidimensionale Effekte sind je nach Betrachtungsweise invers zueinander.

Fig. 2 zeigt die einfachste denkbare Struktur einer mehrschichtig laminierten Karte, die lediglich zwei Deckschichten 10,11 umfasst. Es können weitere Schichten vorgesehen sein, insbesondere eine üblicherweise opake Kernschicht. Falls eine opake Kernschicht als zusätzliche Schicht vorgesehen ist, ist das Hologramm nur von einer Seite zu sehen, es sei denn, das opake Inlett weist einen transparenten Fensterbereich auf, in dem das Hologramm angeordnet ist.

Die auf die Reliefschicht 21 aufgedampfte Metallschicht 22 verstärkt den optischen Effekt der Beugungsstrukturen. Sie kann auch nur in einem Teilbereich vorgesehen sein, insbesondere kann sie Unterbrechungen in Form von Schriftzeichen, Mustern, Bildern, Logos oder dergleichen aufweisen.

Das Sicherheitselement 2 kann auch mit einem Druckbild überdruckt sein, so dass das Hologramm nur in den Lücken des Druckbildes sichtbar ist. Das Druckbild kann mit beliebigen Druckfarben ausgeführt sein. Bei Verwendung von Druckfarben, die ebenfalls vom Betrachtungswinkel abhängig die Farbe wechseln (z.B. Farben mit Flüssigkristallpolymerpigmenten, Iriodinen oder anderen betrachtungswinkelabhängigen Farben) kann dieser Effekt den blickwinkelabhängigen optischen Effekt des Hologramms ergänzen.

Wie eingangs erwähnt, ist für die Zwecke der vorliegenden Erfindung die Materialauswahl, insbesondere die Wahl des Materials für die Reliefschicht 21, von besonderer Wichtigkeit, da diese ausreichend temperatur- und druckbeständig sein muss, damit sie beim Kaschiervorgang die Reliefstruktur nicht verliert. Die Deckschichten 10,11 haben gegenüber der Reliefschicht 21 eine vergleichsweise niedrige Erweichungstemperatur. Die Reliefschicht 21 besteht aus einem Kunststoff mit entsprechend höherer Erweichungstemperatur, insbesondere aus vernetzten, d.h. ausgehärteten Duromer, oder auch einem vernetzten Lack. Die Lacke bzw. Lacksysteme sind aus der EP 0 684 908 B1 bekannt.

Das in Fig. 2 dargestellte Sicherheitselement 2 weist eine erste Lackschicht 21 auf, in der die Beugungsstrukturen eingeprägt sind, sowie die Metallschicht 22, die Schutzlackschicht 26 und die Kleberschichten 23, 24. Die Reliefschicht 21 kann eine Kunststofffolie sein, in die das Relief eingeprägt wurde und die anschließend, ggf. nach ihrer Metallisierung und Beschichtung mit der Schutzlackschicht 26 und den Kleberschichten 23 ausgestanzt wurde, um sie in den Schichtaufbau der Karte 1 einzulagern. Die Kleberschicht 24 ist auf der Deckfolie 10 vorgesehen. Die Reliefschicht 21 kann auch ein vernetzter, insbesondere strahlungsgehärteter Lack sein, der zunächst im nicht vernetzten oder teilweise vorvernetzten Zustand auf einer Transferfolie vorliegt und in den eine Reliefstruktur eingeprägt wird, um nach dem Aushärten des Lacks ohne die Transferfolie im Hot-Stamping-Verfahren auf die Deckschicht 11 übertragen zu werden. Die Transferfolien mit den Sicherheitselementen 2 werden zu diesem Zweck auf Endlosbahnen geprägt, so dass eine Applikation der Sicherheitselemente 2 auf die Deckfolie 11 und das nachfolgende Laminieren mit der weiteren Deckfolie 10 in einem kontinuierlichen Prozess unter Ablösung der Transferfolie erfolgen kann. Dieses Verfahren ist ausführlich in EP 0 684 908 B1 erläutert.

In dem in Fig. 2 dargestellten Kartenaufbau weist das Sicherheitselement 2 eine Schichtdicke von etwa 2 bis 5 µm auf. Der gesamte Kartenaufbau hat im verschweißten Zustand der Einzelschichten eine Dicke von 760 bis 800 µm.

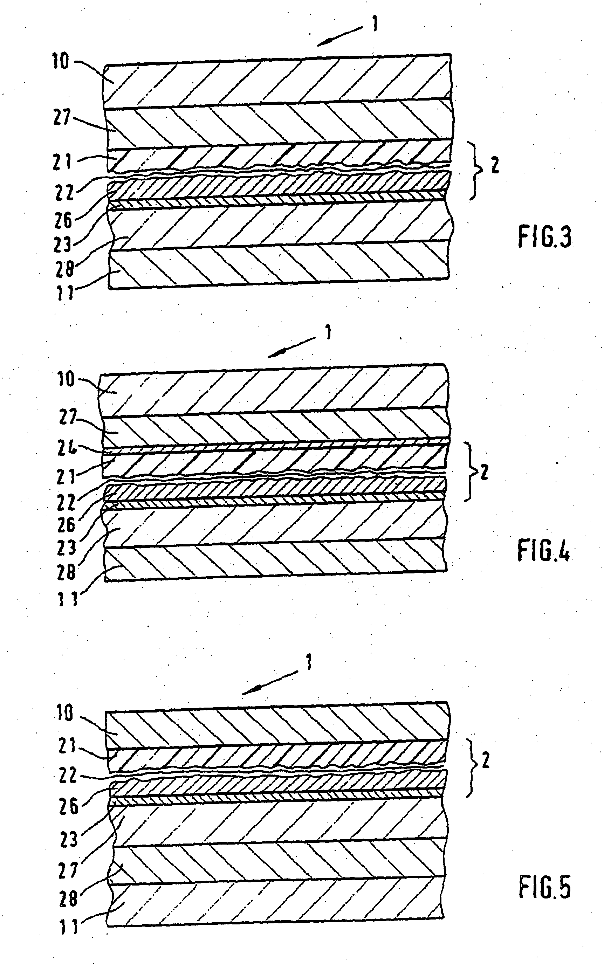

In Fig. 3 ist der in der Fig. 2 beschriebene Kartenaufbau dahingehend modifiziert, dass neben dem Sicherheitselement 2 und den beiden Deckfolien 10 und 11 zwei weitere Folien 27, 28 vorgesehen sind. Diese inneren Kartenschichten 27, 28 schließen das Sicherheitselement 2 ein. Dieser Kartenaufbau hat den Vorteil, dass die Schichten 27 und 28 als innere Kartenschichten von den Deckfolien getrennt behandelt werden können. Diese Schichten weisen üblicherweise das Druckbild auf, wobei eine der beiden Schichten auch opak ausgeführt sein kann, damit das Karteninlett wie allgemein bekannt, nicht durchsichtig ist.

Bei dem in Fig. 3 dargestellten Kartenaufbau ist das Sicherheitselement 2 direkt auf der Folienschicht 27 aufgebracht, indem ganzflächig oder partiell die Lackschicht 21 aufgetragen wurde, in die die Reliefstruktur, wie eingangs beschrieben eingeprägt, der Lack gehärtet, die Metallschicht 22 aufgedampft und schließlich die Reliefstruktur mit einer weiteren Lackschicht 26 abgedeckt wurde. Damit beim späteren Kaschiervorgang eine innige Verbindung des Sicherheitselementbereichs mit der Folie 28 möglich ist, kann die Kleberschicht 23 auf der Lackschicht 26 zusätzlich vorgesehen sein. Falls die Materialien der Lackschicht 26 und der Folie 28 beim Kaschiervorgang eine innige Verbindung ermöglichen, kann auf die Kleberschicht 23 aber auch verzichtet werden.

In Fig. 4 ist der in Fig. 3 genannte Kartenaufbau dahingehend modifiziert, dass das Sicherheitselement 2 nicht direkt auf der Folie 27 erzeugt wurde, sondern als separates Element hergestellt ist, das im Transferverfahren auf die Folie 27 übertragen wird. Aus diesem Grund kann es sinnvoll sein, dass für den Transfervorgang einerseits und für den Kaschiervorgang andererseits auf beiden Seiten des Sicherheitselements Kleberschichten 23 und 24 vorgesehen sind.

Fig. 5 zeigt nun eine weitere Variante des Kartenaufbaus, bei der das Sicherheitselement 2 auf der einer Deckfolie zugewandten Seite des aus den Folien 27, 28 bestehenden Inletts aufgebracht ist. In diesem Fall können beide Folien 27 und 28 opak ausgeführt sein. Das Sicherheitselement 2 kann sowohl auf der Folie selbst erzeugt werden (s. Fig. 3) oder als vorbereitetes Transferelement auf die Oberfläche der Folie 27 übertragen werden (s. Fig. 4). Im vorliegenden Fall ist das Sicherheitselement als Transferelement ausgeführt und mit der Kleberschicht 24 auf der Folie 27 fixiert.

In den Fig. 3, 4 und 5 weist das Karteninlett jeweils zwei Folien 27 und 28 auf. Dies hat den Vorteil, dass die Karte, deren Gesamtdicke genormt ist, aus Einzelschichten besteht, welche eine Dicke aufweisen, die problemlos verarbeitet werden kann. Es ist auch möglich, weitere Schichten im Kartenaufbau vorzusehen, wodurch die Dicke der Einzelschichten weiter reduziert werden kann. Dies scheint insbesondere dann sinnvoll, wenn ein relativ dickes Sicherheitselement von beispielsweise 100 µm oder mehr Verwendung finden soll und hierfür eine Aussparung im Kartenaufbau vorzusehen ist. In diesem Fall sollte die Folie, in der die Aussparung eingebracht ist, in etwa die Dicke des Sicherheitselements 2 aufweisen. Wenngleich der erfindungsgemäße Kartenaufbau es im Prinzip ermöglicht, das Sicherheitselement ohne weitere Vorsichtsmaßnahmen in den Kartenaufbau zu integrieren und im Kaschiervorgang zu verarbeiten, so ist es doch sinnvoll, während des Kaschiervorganges nicht beliebig dicke Sicherheitselemente in den Schichtaufbau einzubetten. Die Praxis zeigt, dass das Folienmaterial auch im erwärmten Zustand nicht in beliebiger Menge für die Einbettung von Zu-satzelementen verdrängt oder komprimiert werden kann. Selbst wenn es möglich wäre (z.B. durch Erhöhen von Kaschierdruck und Kaschiertemperatur), würde das "Wegfließen" des Folienmaterials eine Veränderung, d.h. Verzerrung des Druckbildes bewirken, wodurch die Kartenqualität insgesamt reduziert wird. Durch Vorsehen einer Aussparung kann dies vermieden werden, da dann der Kaschiervorgang lediglich die innige Verbindung der Kartenschichten bewirken muss und keine oder nur unwesentliche Komprimierung oder Verdrängung von Folienmaterial notwendig ist.

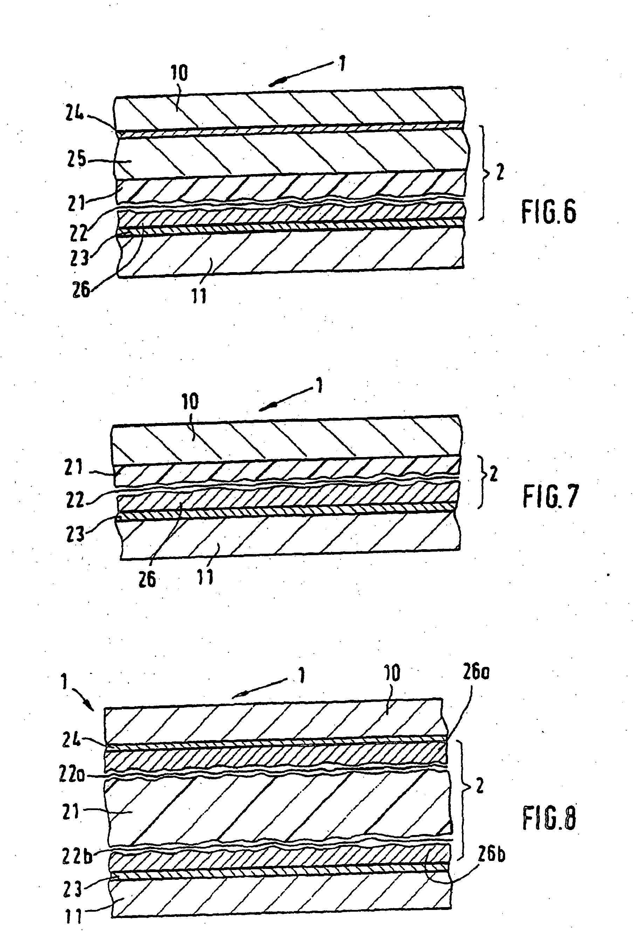

In Fig. 6 ist eine weitere Ausführungsform der Erfindung dargestellt, bei der das Sicherheitselement 2 eine Schicht 21 mit einer Reliefstruktur in einem vernetzten Lack sowie eine Stützschicht 25 für den vernetzten Lack umfasst. Im Übrigen entspricht der Aufbau der Karte 1 dem in Fig. 2 beschriebenen Aufbau. Im vorliegenden Fall besteht das Sicherheitselement 2 im Wesentlichen aus der Lackschicht 21 (mit Reliefstruktur), der Metallschicht 22, der Schutzlackschicht 26 und der Stützschicht 25. Die Einbringung des Sicherheitselements 2 zwischen die Deckfolien 10,11 kann ähnlich wie die Einbringung des in Bezug auf Fig. 2 beschriebenen Sicherheitselements 2 erfolgen, wenn das Sicherheitselement 2 als etikettartiges Element (Patch) eingelagert wird. In einer bevorzugten Ausführung hat die Stützschicht 25 allerdings das Format der Karte, d.h. die Stützschicht ist ganzflächig in der Karte integriert. Die Schichten 21, 22, 26 sind direkt mit der Stützschicht 25 verbunden. Die Dicke der Schichten 21, 22, 26 ist kleiner als 10 µm, vorzugsweise etwa 2 bis 5 um, die Gesamtdicke des Sicherheitselements 2 (mit Stützschicht 25) beträgt etwa 30 µm.

Der Schichtaufbau der Karte 1 ist, wie bereits erwähnt, so zu wählen, dass die einzelnen Schichten bei der auf den Schichtaufbau abgestimmten Kaschiertemperatur, dem zugehörigen Kaschierdruck und der definierten Kaschierzeit zwar möglichst homogen miteinander verbunden werden, ohne dass allerdings das Mikrorelief des Hologramms zerstört wird.

Dieses Ziel kann erfindungsgemäß durch die Kombination der unterschiedlichsten Materialien erreicht werden, soweit sichergestellt ist, dass während des Kaschiervorganges die Schichten des Kartenaufbaus ausreichend "weich" werden, um sich in den Grenzschichten gut miteinander zu verbinden, die das Relief tragende Schicht aber so stabil bleibt, dass das Mikrorelief sich nicht verformt oder rückbildet.

In der folgenden Tabelle sind die Erweichungstemperaturen einiger Folienmaterialien zusammengestellt (PET: Polyethylenterephthalat; ABS: Acrylnitril-Butadien-Styrol):

| Folienmaterial | Erweichungstemperatur [°C] |
|---|---|
| PC | 146 -148 |
| thermoplastisches Polyester | 74 - 76 |
| PVC | 65 - 80 |
| ABS | 90 |
| Kristallines PET | > 200 |

Der für die Schichten 21, 26 verwendete Lack hat eine Erweichungstemperatur größer 240°C. Er ist somit deutlich temperaturstabiler als die in der Tabelle genannten Folienmaterialien.

In der weiteren Tabelle sind nun einige Materialkombinationen zuammen mit der Kaschiertemperatur der Kaschieranlage genannt, die für die Herstellung von Karten mit eingebettetem Sicherheitselement vewendbar sind.

| Deckfolie/Inlett | Stützfolie | Kaschiertemperatur |
|---|---|---|
| Polycarbonat | kristallines PET | ca. 175 °C |
| thermoplastisches Polyester | PC oder krist. PET | ca. 130°C |
| PVC | PC oder krist. PET | ca. 150°C |
| ABS | PC oder krist. PET | ca. 140°C |

In Fig. 7 ist eine weitere Ausführungsform der vorliegenden Erfindung dargestellt, bei der die Reliefschicht 21 wiederum als vernetzter Lack vorliegt. In diesem Fall wurde die Reliefschicht 21 nicht auf einem Transferband erzeugt, ausgehärtet und anschließend übertragen, sondern die Reliefschicht 21 wurde unmittelbar auf der Deckschicht 10 erzeugt. D.h., die Deckschicht 10 bildete während des Prägens der Reliefstruktur in die noch nicht vernetzte Lackschicht die Träger- bzw. Stützschicht für die Lackschicht 21. Bei dieser Herstellungsvariante kann das Sicherheitselement 2 auf der Deckschicht 10 erzeugt, mit der Metallschicht 22 versehen und mit der Schutzlackschicht 26 abgedeckt werden. Die Schutzschicht 26 besteht, wenn eine Metallschicht 22 vorgesehen ist, vorzugsweise aus demselben Reaktionslack wie die Reliefschicht 21.

Falls im vorliegenden Beispiel oder den anderen Ausführungsformen auf die Metallschicht 22 verzichtet wird, muss die Schutzlackschicht 26 aus einem anderen Lack als dem für die Schicht 21 verwendeten bestehen. Dieser Lack muss einen von der Reliefschicht 21 möglichst abweichenden Brechungsindex aufweisen, damit die optischen Beugungseffekte noch wahrnehmbar sind. Dieser andere Lack sollte ebenfalls eine höhere Erweichungstemperatur aufweisen als die Deck- oder Inlettfolien.

Das kontinuierliche Verfahren zum Applizieren des Sicherheitselements 2 auf einem Substrat, hier der Deckschicht 10, ist ebenfalls in der EP 0 684 908 B1 beschrieben, auf deren Offenbarungsgehalt insoweit explizit Bezug genommen wird.

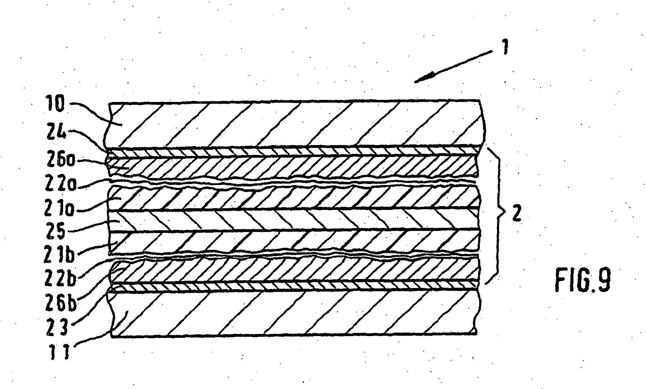

In den Fig. 8 und 9 sind zwei weitere Ausführungsformen der Erfindung dargestellt, bei denen das Sicherheitselement 2 auf einander gegenüberliegenden Seiten mit Reliefstrukturen und ggf. metallischen Beschichtungen 22a, 22b sowie Schutzlackschichten 26a, 26b ausgestattet ist. Die Deckschichten 10,11 und die angrenzenden Kleberschichten 23, 24 sind demzufolge zumindest im Bereich der Reliefstrukturen transparent auszubilden. In der Ausführungsform gemäß Fig. 8 besteht die Reliefschicht 21 aus einem Kunststoffmaterial mit vergleichsweise hoher Erweichungstemperatur, vorzugsweise aus kristallinem Polyester oder Polycarbonat (PC). Das Sicherheitselement 2 hat beispielweise eine Dicke von 30 µm.

Das Sicherheitselement 2 gemäß der Ausführungsform nach Fig. 9 umfasst stattdessen eine zentrale Stützschicht 25 mit einer Dicke von ca. 90 µm, auf der beidseitig Lackschichten 21a, 21b mit Reliefstrukturen, Metallschichten 22a, 22b und Schutzlackschichten 26a, 26b aufgebracht sind.

Das Sicherheitselement hat eine Dicke von etwa 100 µm. Während die Erzeugung einer nur einseitigen Reliefstruktur üblicherweise mittels einem einzelnen Prägezylinder erfolgt, können die einander gegenüberliegenden Reliefstrukturen gemäß Fig. 8 und 9 beispielsweise simultan erzeugt werden, indem das zu prägende Material durch den Spalt zweier, einander gegenüberliegender Prägezylinder geführt wird. Anschließend werden beide Reliefs mit den Metallschichten versehen und mit den Schutzlackschichten abgedeckt.

Es sind zahlreiche weitere Ausführungsformen denkbar, um die erfindungsgemäße Lösung umzusetzen. Die erfindungsgemäße Lösung gestattet es erstmals, Sicherheitselemente mit Reliefstrukturen, insbesondere holographischen Beugungsstrukturen, in eine mehrschichtige Karte einzulaminieren, ohne dass die Reliefstrukturen beim Laminieren der Karte nennenswert beeinträchtigt werden. Durch die gewählten Materialien mit unterschiedlicher Erweichungstemperatur wird erreicht, dass das Sicherheitselement bei den auftretenden Laminiertemperaturen in sich stabil bleibt und keinen zusätzlichen Schutz während des Laminiervorgangs erfordert. Besonders gute Ergebnisse wurden mit den genannten Materialien und Materialkombinationen erzielt. Das in die mehrschichtige Karte eingelagerte Sicherheitselement ist beim späteren Gebrauch keiner direkten mechanischen Belastung mehr ausgesetzt und damit auch keinem direkten Verschleiß unterworfen, wodurch die Lebensdauer des Sicherheitselements der Lebensdauer der Karte entspricht.

## Patentansprüche

1. Karte (1), insbesondere Kreditkarte, Identitätskarte, Bankkarte oder dergleichen, die mehrere miteinander laminierte Schichten (10, 11) umfaßt, zwischen denen ein Sicherheitselement (2) mit Reliefstruktur, insbesondere holographischen Beugungsstrukturen, eingelagert ist, **dadurch** gekenntzeichnet, dass die Reliefstruktur in einer Lackschicht (21) des Sicherheitselements (2) vorliegt, die eine höhere Erweichungstemperatur besitzt, als die Schichten (10, 11) der Karte (1), zwischen denen das Sicherheitselement (2) eingelagert ist, und dass die Lackschicht (21), in der die Reliefstruktur vorliegt, eine vernetzte Reaktionslackschicht ist.

2. Karte nach Anspruch 1, **dadurch gekennzeichnet, dass** die Reaktionslackschicht (21) ein radikalisch, kationisch oder blaulichthärtender Lack ist.

3. Karte nach Anspruch 2, **dadurch gekennzeichnet, dass** der kationisch oder radikalisch härtende Lack ein UV-härtbarer Lack ist.

4. Karte nach einem der Ansprüche 1 bis 3, **dadurch gekennzeichnet, dass** das Sicherheitselement (2) die Lackschicht (21) mit der Reliefstruktur, eine Schutzlackschicht (26) sowie eine weitere, mit der Lackschicht (21) verbundene Stützschicht (25) umfasst.

5. Karte nach Anspruch 4, **dadurch gekennzeichnet, dass** die Schutzlackschicht (26) aus einem vernetzten Reaktionstack besteht.

6. Karten nach einem der Ansprüche 1 bis 5, **dadurch gekennzeichnet, dass** das Sicherheitselement (2) transparent ist.

7. Karte nach Anspruch 6, **dadurch gekennzeichnet, dass** das Sicherheitselement (2) einseitig bedruckt ist.

8. Karte nach Anspruch 6 oder 7, **dadurch gekennzeichnet, dass** das Sicherheitselement (2) zusätzliche optische Effekte, insbesondere mit Flüssigkristallpolymeren, Iriodinen oder anderen betrachtungswinkelabhängigen Druckfarben hergestellte Druckbilder aufweist.

9. Karte nach einem der Ansprüche 1 bis 5, **dadurch gekennzeichnet, dass** die Reliefstruktur der Reliefschicht (21) metallbeschichtet ist.

10. Karte nach Anspruch 9, **dadurch gekennzeichnet, dass** die Metallbeschichtung (22; 22a, 22b) der Reliefstruktur visuell erkennbare Unterbrechungen aufweist.

11. Karte nach Anspruch 10, **dadurch gekennzeichnet, dass** die Unterbrechungen der Metallbeschichtung (22; 22a, 22b) in Form von Zeichen, Logos, Mustern oder dergleichen vorliegen.

12. Karte nach einem der Ansprüche 1 bis 11, **dadurch gekennzeichnet, dass** das Sicherheitselement (2) in einem transparenten Fenster der Karte (1) angeordnet ist, so dass es von beiden Seiten der Karte erkennbar ist.

13. Karte nach Anspruch 12, **dadurch gekennzeichnet, dass** das Sicherheitselement (2) eine Stützschicht (25) umfasst, die beidseitig mit je einer Reliefstrukturen aufweisenden Lackschicht (21a, 21b) versehen ist.

14. Karte nach Anspruch 12, **dadurch gekennzeichnet, dass** die Reliefstrukturen des Sicherheitselements (2) von je einer Schutzlackschicht abgedeckt sind.

15. Karte nach einem der Ansprüche 1 bis 14, **dadurch gekennzeichnet, dass** zwischen Sicherheitselement (2) und angrenzenden Folien Kleberschichten (23, 24) vorliegen.

16. Karte nach einem der Ansprüche 1 bis 15, **dadurch gekennzeichnet, dass** die Reliefstrukturen in die Lackschicht geprägt sind.

17. Karte nach einem der Ansprüche 1 bis 4, **dadurch gekennzeichnet, dass** die Lackschicht (21) unmittelbar an eine Schicht (10) der Karte (1) angrenzt.

18. Verfahren zur Herstellung einer mehrschichtigen laminierten Karte (1), insbesondere zur Herstellung einer Kreditkarte, Identitätskarte, Bankkarte oder dergleichen, die mehrere miteinander laminierte Schichten (10, 11) umfasst, zwischen denen ein Sicherheitselement (2) mit Reliefstruktur, insbesondere holographischen Beugungsstrukturen eingelagert ist, umfassend die Schritte:
- es wird eine Reaktionslackschicht auf einer Stützschicht (25) bereitgestellt;
- im die Reaktionslackschicht wird eine Reliefstruktur geprägt und die Vernetzung der Reaktionslackschicht wird aktiviert, um eine stabile Reliefschicht (21) zu erzeugen,
- auf die Reliefschicht (21) wird, ggf. nach zumindest teilweiser Metallisierung (22) und Abdeckung derselben mit einer Schutzlackschicht (26), eine Kleberschicht (23) aufgebracht,
- die Kleberschicht (23) wird in Kontakt mit einer ersten Schicht (11) der zu laminierenden Karte (1) gebracht,
- die erste Schicht (11) wird mit mindestens einer weiteren Schicht (10) der Karte (1) so laminiert, dass die Reliefschicht (21) und Schutztackschicht (26) zwischen der ersten und der weiteren Schicht (10, 11) der Karte (1) eingelagert ist, wobei die Laminiertemperatur unterhalb der Erweichungstemperatur der Reliefschicht (21) liegt.

19. Verfahren nach Anspruch 18, **dadurch gekennzeichnet, dass** die Stützschicht (25) von der Reliefschicht (21) vor dem Schritt des Laminierens entfernt wird.

20. Verfahren nach Anspruch 18 oder 19, **dadurch gekennzeichnet, dass** zwischen die weitere Schicht (10) der Karte (1) und das angrenzende Sicherheitelement (2) eine weitere Kleberschicht (24) vorgesehen wird.

21. Verfahren nach einem der Ansprüche 18 bis 20, **dadurch gekennzeichnet, dass** auf beiden Seiten der Stützschicht (25) mit zumindest teilflächiger Metallisierung (22a, 22b) und Schutzlackschichten (26a, 26b) abgedeckte stabile Reliefschichten (21a, 21b) Verwendung finden.

22. Verfahren nach einem der Ansprüche 18 bis 21, **dadurch gekennzeichnet, dass** die Reliefschicht (21) und, soweit die Stützschicht (25) nicht entfernt wird, auch die angrenzende Stützschicht (25) transparent ausgebildet werden, und die der Reliefstruktur gegenüberliegende Seite mit einem Druckbild und/oder weiteren zusätzlichen optischen Effekten versehen wird.

23. Verfahren zur Herstellung einer mehrschichtigen laminierten Karte (1), insbesondere zum Herstellen einer Kreditkarte, Identitätskarte, Bankkarte, oder dergleichen, die mehrere, miteinander laminierte Schichten (10, 11) umfasst, zwischen denen ein Sicherheitselement (2) mit Reliefstruktur, insbesondere holographischen Beugungsstrukturen, eingelagert ist, umfassend die Schritte:
- es wird eine Reaktionslackschicht auf einer ersten Schicht (10) der zu laminierenden Karte (1) bereitgestellt,
- in die Reaktionslackschicht wird eine Reliefstruktur geprägt und die Vernetzung des Reaktionslacks wird aktiviert, um eine stabile Reliefschicht (21) zu erzeugen,
- auf die Reliefschicht (21) wird, gegebenenfalls nach zumindest teilweiser Metallisierung (22) der Reliefoberfläche und nach Abdecken derselben mit einer Schutzlackschicht (26), eine Kleberschicht (23) aufgebracht,
- die Kleberschicht wird in Kontakt mit einer weiteren Schicht (11) der zu laminierenden Karte (1) gebracht, und die erste und die weitere Schicht (10, 11) der Karte (1) werden so laminiert, dass die Reliefschicht (21) zwischen der ersten und weiteren Schicht (10, 11) eingelagert ist, wobei die Laminiertemperatur unterhalb der Erweichungstemperatur der Reliefschicht (21) liegt.

24. Verfahren nach einem der Ansprüche 18 bis 23, **dadurch gekennzeichnet, dass** der Reaktionslack ausgewählt wird aus der Gruppe der radikalisch, kationisch oder blaulichthärtenden Lacke.

25. Verfahren zur Herstellung einer mehrschichtigen laminierten Karte (1), insbesondere Kreditkarte, Identitätskarte, Bankkarte oder dergleichen, die mehrere miteinander laminierte Schichten (10, 11) umfasst, zwischen denen ein Sicherheitselement (2) mit Reliefstruktur, insbesondere holographischen Beugungsstrukturen, eingelagert ist, umfassend die Schritte:
- es wird eine Kunststofffolie (21) bereitgestellt,
- in die Kunststofffolie werden beidseitig Reliefstrukturen eingeprägt,
- auf die Reliefstrukturen werden, gegebenenfalls nach zumindest teilweiser Metallisierung (22a; 22b) der Reliefoberfläche und Abdecken derselben mit Schutzlackschichten (26a, 26b), eine Kleberschicht (23) aufgebracht,
- die Kleberschicht (23) wird in Kontakt mit einer ersten Schicht (11) der zu laminierenden Karte (1) gebracht,
- die erste Schicht (11) wird mit mindestens einer weiteren Schicht (10) der Karte so laminiert, dass die Reliefschicht (21) zwischen der ersten und weiteren Schicht (10, 11) eingelagert ist, wobei die Laminiertemperatur unter der Erweichungstemperatur der Reliefschicht (21) liegt.

26. Verfahren nach Anspruch 25, **dadurch gekennzeichnet, dass** gegenüberliegend zu der Kleberschicht (23) eine weitere Kleberschicht (24) auf die Reliefschicht (21) aufgebracht wird.

27. Verfahren nach einem der Ansprüche 25 oder 26, **dadurch gekennzeichnet, dass** die Reliefschicht (21) beidseitig mit opaker Druckfarbe abgedeckt wird, wodurch die Reliefs auf beiden Seiten nur teilweise visuell erkennbar sind.

28. Verfahren nach einem der Ansprüche 25 bis 27, **dadurch gekennzeichnet, dass** das Material der Reliefschicht (21) und der Schutzlackschicht (26) ausgewählt wird aus der Gruppe von Materialien umfassend teilkristallines Polyester, insbesondere Polyethylenterephthalat (PET) und Polycarbonat (PC).

## Claims

1. A card (1), in particular credit card, identity card, bank card or the like, including a plurality of laminated layers (10, 11) between which a security element (2) with a relief structure, in particular holographic diffraction structures, is embedded, **characterized in that** the relief structure is present in a lacquer layer (21) of the security element (2) that has a higher softening temperature than the layers (10, 11) of the card (1) between which the security element (2) is embedded, and that the lacquer layer (21) in which the relief structure is present is a crosslinked reaction lacquer layer.

2. A card according to claim 1, **characterized in that** the reaction lacquer layer (21) is a radically, cationically or blue-light-curing lacquer.

3. A card according to claim 2, **characterized in that** the cationically or radically curing lacquer is a UV-curable lacquer.

4. A card according to any of claims 1 to 3, **characterized in that** the security element (2) includes the lacquer layer (21) with the relief structure, a protective lacquer layer (26) and a further support layer (25) connected with the lacquer layer(21).

5. A card according to claim 4, **characterized in that** the protective lacquer layer (26) consists of a crosslinked reaction lacquer.

6. A card according to any of claims 1 to 5, **characterized in that** the security element (2) is transparent.

7. A card according to claim 6, **characterized in that** the security element (2) is printed on one side.

8. A card according to claim 6 or 7, **characterized in that** the security element (2) has additional optical effects, in particular printed images produced with liquid crystal polymers, iriodines or other viewing-angle-dependent inks.

9. A card according to any of claims 1 to 5, **characterized in that** the relief structure of the relief layer (21) is metal-coated.

10. A card according to claim 9, **characterized in that** the metal coating (22; 22a, 22b) of the relief structure has visually recognizable interruptions.

11. A card according to claim 10, **characterized in that** the interruptions of the metal coating (22; 22a, 22b) are present in the form of characters, logos, patterns or the like.

12. A card according to any of claims 1 to 11, **characterized in that** the security element (2) is disposed in a transparent window of the card (1) so that it is recognizable from both sides of the card.

13. A card according to claim 12, **characterized in that** the security element (2) includes a support layer (25) provided on each side with a lacquer layer (21 a, 21b) having relief structures.

14. A card according to claim 12, **characterized in that** the relief structures of the security element (2) are each covered by a protective lacquer layer.

15. A card according to any of claims 1 to 14, **characterized in that** adhesive layers (23, 24) are present between security element (2) and adjoining films.

16. A card according to any of claims 1 to 15, **characterized in that** the relief structures are embossed into the lacquer layer.

17. A card according to any of claims 1 to 4, **characterized in that** the lacquer layer (21) directly adjoins a layer (10) of the card (1).

18. A method for producing a multilayer laminated card (1), in particular for producing a credit card, identity card, bank card or the like, including a plurality of laminated layers (10, 11) between which a security element (2) with a relief structure, in particular holographic diffraction structures, is embedded, comprising the steps of:
- providing a reaction lacquer layer on a support layer (25),
- embossing a relief structure into the reaction lacquer layer and activating the crosslinking of the reaction lacquer layer to produce a stable relief layer (21),
- applying an adhesive layer (23) to the relief layer (21), optionally after at least partial metalization (22) and covering thereof with a protective lacquer layer (26),
- contacting the adhesive layer (23) with a first layer (11) of the card (1) to be laminated,
- laminating the first layer (11) with at least one further layer (10) of the card (1) so that the relief layer (21) and protective lacquer layer (26) is embedded between the first and further layers (10, 11) of the card (1), the laminating temperature being below the softening temperature of the relief layer (21).

19. A method according to claim 18, **characterized in that** the support layer (25) is removed from the relief layer (21) before the laminating step.

20. A method according to claim 18 or 19, **characterized in that** a further adhesive layer (24) is provided between the further layer (10) of the card (1) and the adjoining security element (2).

21. A method according to any of claims 18 to 20, **characterized in that** stable relief layers (21a, 21b) covered with at least partial-area metalization (22a, 22b) and protective lacquer layers (26a, 26b) are used on both sides of the support layer (25).

22. A method according to any of claims 18 to 21, **characterized in that** the relief layer (21) and, if the support layer (25) is not removed, also the adjoining support layer (25) are of transparent design, and the side opposite the relief structure is provided with a printed image and/or further additional optical effects.

23. A method for producing a multilayer laminated card (1), in particular for producing a credit card, identity card, bank card or the like, including a plurality of laminated layers (10, 11) between which a security element (2) with a relief structure, in particular holographic diffraction structures, is embedded, comprising the steps of:
- providing a reaction lacquer layer on a first layer (10) of the card (1) to be laminated,
- embossing a relief structure into the reaction lacquer layer, and activating the crosslinking of the reaction lacquer to produce a stable relief layer (21),
- applying an adhesive layer (23) to the relief layer (21), optionally after at least partial metalization (22) of the relief surface and covering thereof with a protective lacquer layer (26),
- contacting the adhesive layer with a further layer (11) of the card (1) to be laminated, and laminating the first and further layers (10, 11) of the card (1) so that the relief layer (21) is embedded between the first and further layers (10, 11), the laminating temperature being below the softening temperature of the relief layer (21).

24. A method according to any of claims 18 to 23, **characterized in that** the reaction lacquer is selected from the group of radically, cationically or blue-light-curing lacquers.

25. A method for producing a multilayer laminated card (1), in particular credit card, identity card, bank card or the like, including a plurality of laminated layers (10, 11) between which a security element (2) with a relief structure, in particular holographic diffraction structures, is embedded, comprising the steps of:
- providing a plastic film (21),
- embossing relief structures into the plastic film on both sides,
- applying an adhesive layer (23) to the relief structures, optionally after at least partial metalization (22a, 22b) of the relief surface and covering thereof with protective lacquer layers (26a, 26b),
- contacting the adhesive layer (23) with a first layer (11) of the card (1) to be laminated,
- laminating the first layer (11) with at least one further layer (10) of the card so that the relief layer (21) is embedded between the first and further layers (10, 11), the laminating temperature being below the softening temperature of the relief layer (21).

26. A method according to claim 25, **characterized in that** a further adhesive layer (24) is applied to the relief layer (21) opposite the adhesive layer (23).

27. A method according to either of claims 25 and 26, **characterized in that** the relief layer (21) is covered with opaque printing ink on both sides, so that the reliefs are visually recognizable only partly on both sides.

28. A method according to any of claims 25 to 27, **characterized in that** the material of the relief layer (21) and of the protective lacquer layer (26) is selected from the group of materials comprising partly crystalline polyester, in particular polyethylene terephthalate (PET) and polycarbonate (PC).

## Revendications

1. Carte (1), en particulier carte de crédit, carte d'identité, carte bancaire ou autres de ce type, qui comprend plusieurs couches (10, 11), stratifiées les unes par 5rapport aux autres entre lesquelles est inséré un élément de sécurité (2) avec une structure en relief, en particulier des structures de réfraction holographique, **caractérisée en ce que** la structure en relief est présente dans une couche de matière plastique ou de laque (21) de l'élément de sécurité (2), qui présente une température de ramollissement plus élévée que les couches (10, 11) de la carte (1) entre lesquelles est inséré l'élément de sécurité et **en ce que** la couche de laque (21) qui est présente dans la structure en relief est une couche de laque réactionnelle réticulée.

2. Carte selon la revendication 1, **caractérisée en ce que** la couche de laque réactionnelle (21) est une laque radicalaire, cationique ou qui durcit à la lumière bleue.

3. Carte selon la revendication 2, **caractérisée en ce que** la laque durcissante cationique ou radicalaire est une laque susceptible de durcir aux rayons UV.

4. Carte selon l'une quelconque des revendications 1 à 3, **caractérisée en ce que** l'élément de sécurité (2) comprend la couche de laque (21) avec la structure en relief, une couche de laque de protection (26), ainsi qu'une autre couche d'appui (25), reliée à la couche de laque (21).

5. Carte selon la revendication 4, **caractérisée en ce que** la structure en relief et la couche de laque de protection (26) se composent d'une laque réactionnelle réticulée.

6. Carte selon l'une des revendications 1 à 5, **caractérisée en ce que** l'élément de sécurité (2) est transparent.

7. Carte selon la revendication 6, **caractérisée en ce que** l'élément de sécurité (2) est imprimé sur un côté.

8. Carte selon la revendication 6 ou 7, **caractérisée en ce que** l'élément de sécurité (2) comprend des effets optiques supplémentaires, en particulier des images imprimées fabriquées avec des polymères à cristaux liquides, des composés d'iode sensibles aux infra-rouges ou d'autres encres d'impression qui dépendent de l'angle de vision.

9. Carte selon l'une quelconque des revendications 1 à 5, **caractérisée en ce que** la structure en relief de la couche en relief (21) comporte un revêtement métallique.

10. Carte selon la revendication 9, **caractérisée en ce que** le revêtement métallique (22, 22 a, 22 b) de la structure en relief comprend des interruptions reconnaissables visuellement.

11. Carte selon la revendication 10, **caractérisée en ce que** les interruptions du revêtement métallique (22, 22 a, 22 b) sont présentes sous forme de signes, de logos, de modèles ou similaires.

12. Carte selon l'une quelconque des revendications 1 à 11, **caractérisée en ce que** l'élément de sécurité (2) est disposé dans une fenêtre transparente de la carte (1), de sorte à pouvoir être reconnu des deux côtés de la carte.

13. Carte selon la revendication 12, **caractérisée en ce que** l'élément de sécurité (2) comprend une couche d'appui (25), qui est prévue des deux côtés avec une couche de laque (21 a, 21 b) présentant des structures en relief.

14. Carte selon la revendication 12, **caractérisée en ce que** les structures en relief de l'élément de sécurité (2) sont recouvertes chacune par une couche de laque de protection.

15. Carte selon l'une quelconque des revendications 1 à 14, **caractérisée en ce que** des couches de colle (23, 24) sont présentes entre l'élément de sécurité (2) et les feuilles adjacentes.

16. Carte selon l'une des revendications 1 à 15, **caractérisée en ce que** les structures en relief sont estampées dans la couche de matière plastique ou de laque.

17. Carte selon l'une des revendications 1 à 4, **caractérisée en ce que** la couche de laque (21) est immédiatement voisine d'une couche (10) de la carte (1).

18. Procédé de fabrication d'une carte (1) stratifiée à plusieurs couches, en particulier pour fabriquer une carte de crédit, une carte d'identité, une carte bancaire ou similaire, qui comprend plusieurs couches (10, 11) stratifiées les unes contre les autres, entre lesquelles est inséré un élément de sécurité (2) avec une structure en relief, en particulier des structures de diffraction holographique, comprenant les étapes suivantes :
- une couche de laque réactionnelle est préparée sur une couche d'appui (25),
- une structure en relief est estampée dans la couche de laque réactionnelle et la réticulation de la couche de laque réactionnelle est activée pour créer une couche en relief (21) stable,
- sur la couche en relief (21) est appliquée une couche de colle (23), le cas échéant après une métallisation (22) au moins partielle et une couverture de celle-ci par une couche de laque de protection (26),
- la couche de colle (23) est mise en contact avec une première couche (11) de la carte (1) à stratifier,
- la première couche (11), avec au moins une autre couche (10) de la carte (1), est stratifiée de sorte que la couche en relief (21) et la couche de laque de protection (26) soient insérées entre la première couche et la couche suivante (10, 11) de la carte (1), la température de stratification se trouvant au-dessous de la température de ramollissement de la couche en relief (21).

19. Procédé selon la revendication 18, **caractérisé en ce que** la couche d'appui (25) est éloignée de la couche en relief (21) avant l'étape de stratification.

20. Procédé selon la revendication 18 ou 19, **caractérisé en ce qu'**il est prévu entre la couche supplémentaire (10) de la carte (1) et l'élément de sécurité (2) juxtaposé une autre couche de colle (24).

21. Procédé selon l'une des revendications 18 à 20, **caractérisé en ce qu'**on utilise sur les deux côtés de la couche d'appui (25) des couches en relief stables (21a,21b) recouvertes d'au moins une métallisation partielle et de couches de laque de protection (26 a, 26 b).

22. Procédé selon l'une quelconque des revendications 18 à 21, **caractérisé en ce que** la couche en relief (21) et, à condition que la couche d'appui (25) ne soit pas éliminée, également la couche d'appui (25) adjacente sont réalisées transparentes, tandis que les côtés situés en face de la structure en relief sont pourvus d'une image imprimée et/ou d'autres effets optiques supplémentaires.

23. Procédé pour la fabrication d'une carte (1) stratifiée à plusieurs couches, en particulier pour fabriquer une carte de crédit, une carte d'identité, une carte bancaire ou similaire, qui comprend plusieurs couches (10, 11) stratifiées les unes contre les autres, entre lesquelles est inséré un élément de sécurité (2) avec structure en relief, en particulier des structures de diffraction holographique, comprenant les étapes suivantes :
- une couche de laque réactionnelle est préparée sur une première couche (10) de la carte (1) à stratifier,
- une structure en relief est estampée dans la couche de laque réactionnelle et la réticulation de la couche de laque relationnelle est activée pour produire une couche en relief (21) stable,
- sur la couche en relief (21) est appliquée une couche de colle (23), le cas échéant après une métallisation (22) au moins partielle des surfaces en relief et après la couverture de celle-ci par une couche de laque de protection (26),
- la couche de colle est mise en contact avec une autre couche (11) de la carte (1) à stratifier, et la première et la deuxième couches (10, 11) de la carte (1) sont stratifiées de sorte que la couche en relief (21) soit insérée entre la première couche et la suivante (10, 11), la température de stratification se trouvant au-dessous de la température de ramollissement de la couche en relief (21).

24. Procédé selon l'une des revendications 18 à 23, **caractérisé en ce que** la laque réactionnelle est choisie dans le groupe des laques radicalaires, cationiques ou qui durcissent à la lumière bleue.

25. Procédé pour la fabrication d'une carte (1) stratifiée à plusieurs couches, en particulier pour fabriquer une carte de crédit, une carte d'identité, une carte bancaire ou similaire, qui comprend plusieurs couches (10, 11) stratifiées les unes contre les autres, entre lesquelles est inséré un élément de sécurité (2) avec une structure en relief, en particulier des structures de diffraction holographique, comprenant les étapes consistant :
- à préparer une feuille de matière plastique (21),
- dans la feuille de matière plastique, à estamper des deux côtés des structures en relief,
- à appliquer sur les structures en relief une couche de colle (23), le cas échéant 15après une métallisation au moins partielle (22 a, 22 b) des surfaces en relief et une couverture de celle-ci par des couches de laque de protection (26 a, 26b),
- à mettre la couche de colle (23) en contact avec une première couche (11) de la carte (1) à stratifier,
- à stratifier la première couche (11), avec au moins une autre couche (10) de la carte, de sorte que la couche en relief (21) soit insérée entre la première couche et la suivante (10, 11) de la carte, la température de stratification se trouvant au-dessous de la température de ramollissement de la couche en relief (21).

26. Procédé selon la revendication 25, **caractérisé en ce qu'**on applique en face de la couche de colle (23), une autre couche de colle (24) sur la couche en relief (21).

27. Procédé selon la revendication 25 ou 26, **caractérisé en ce que** la couche en relief (21) est recouverte des deux côtés d'encre d'imprimerie opaque, de sorte que les reliefs sur les deux côtés ne soient reconnaissables visuellement que partiellement.

28. Procédé selon l'une des revendications 25 à 27, **caractérisé en ce que** le matériau pour la couche en relief (21) et la couche de laque de protection (26) est sélectionné dans le groupe de matériaux comprenant les polyesters semi-cristallins, en particulier le polyéthylènetéréphtalate (PET) et le polycarbonate (PC).
